# FASCICULE DE BREVET EUROPEEN

(11) **EP 2 714 379 B1**
(45) Date de publication et mention de la délivrance du brevet: **03.02.2016**
(21) Numéro de dépôt: 12731073.8
(22) Date de dépôt: 25.05.2012
(51) Int. Cl.: B29C 70/48

(54) **DISPOSITIF DE MAINTIEN EN PRESSION POUR LA REALISATION DE PIECES COMPOSITES PAR INJECTION DE RESINE ET PROCEDE ASSOCIE**
DRUCKBEWAHRENDE VORRICHTUNG ZUR ERZEUGUNG VON VERBUNDBAUTEILEN DURCH HARZEINSPRITZEN UND ZUGEHÖRIGES VERFAHREN
PRESSURE-MAINTAINING DEVICE FOR CREATING COMPOSITE COMPONENTS BY INJECTING RESIN AND ASSOCIATED METHOD

(30) Priorité: 27.05.2011 FR 1154662
(43) Date de publication de la demande: 09.04.2014
(73) Titulaire: Snecma, 75015 Paris (FR)
(72) Inventeur: MATHON, Richard, F-77550 Moissy-Cramayel Cedex (FR); PHELIPPEAU, Antoine, F-77550 Moissy-Cramayel Cedex (FR)
(74) Mandataire: Camus, Olivier Jean-Claude
(86) Numéro de dépôt international: PCT/FR2012/051186
(87) Numéro de publication internationale: WO 2012/168623

(56) Documents cités:
- WO-A1-97/48546
- WO-A1-2007/054315
- DE-C1- 19 630 840
- GB-A- 989 124

## Description

La présente invention concerne un dispositif de maintien en pression pour la réalisation de pièces composites réalisées par injection RTM (resin transfert molding en langue anglaise) ainsi qu'un procédé de réalisation d'une pièce en matériaux composites par injection RTM.

L'invention est particulièrement applicable au domaine de l'aéronautique.

Le procédé RTM est un procédé connu pour la réalisation de pièces en matériaux composites (fibre-résine) à haut rapport résistance sur masse. Un tel procédé est notamment décrit dans le document WO2007/054315.

De façon classique, le procédé de RTM comporte les opérations fondamentales suivantes :
- préparation d'une préforme de fibres par tissage ;
- disposition de la préforme dans un moule d'injection :
- injection de la résine à l'état liquide ;
- application d'une pression de maintien sur la résine injectée et polymérisation de la pièce par chauffage.

Les résines utilisées sont très fluides de manière à bien pénétrer entre les différentes fibres de la préforme, même lorsqu'elles sont injectées sous une pression réduite. Pendant la polymérisation sous l'effet de la chaleur, la résine injectée passe successivement de l'état liquide à l'état gélifié et enfin à l'état solide.

Afin de garantir des pièces de qualité, sans défaut, et sans porosité, notamment à cause du phénomène de dégazage de la résine pendant la polymérisation, il est nécessaire de maintenir la pression de maintien jusqu'à la polymérisation complète de la pièce.

Dans les systèmes d'injection RTM connu, la mise en pression est assurée par l'injecteur de résine. Il est alors nécessaire de maintenir l'injecteur en place et de maintenir une pression jusqu'au figeage complet de la résine. Ainsi, ces systèmes d'injection RTM ne permettent pas de réaliser de pièces à des cadences élevées, puisque le temps d'immobilisation de l'injecteur est indexé à celui de la polymérisation de la résine. Les temps d'occupation des moyens de production sont alors importants et non compressibles.

De plus, le maintien en place du dispositif d'injection, jusqu'à la polymérisation complète de la pièce, augmente le risque de polymérisation de la résine à l'intérieur du dispositif d'injection et à l'intérieur des canalisations situées entre le dispositif d'injection et le moule, ce qui rend complexe les opérations de nettoyage du dispositif d'injection.

Enfin, lors de l'utilisation d'une étuve comme moyen de chauffage, la résine contenue dans la canalisation comprise entre le dispositif d'injection et le moule peut être amené à polymériser avant la résine contenue dans le moule dont l'épaisseur de résine est plus importante. Ce figeage dans la canalisation ne permet donc plus d'assurer la transmission de la pression de maintien jusque dans le moule, ce qui se traduit par la présence de porosité dans la pièce.

Le document DE19630840 propose une solution alternative aux systèmes d'injection RTM en réalisant la mise sous pression de la résine dans le réseau d'injection au moyen d'une membrane souple de manière à s'affranchir de l'utilisation du dispositif d'injection pour le maintien de la pression selon le préambule de la revendication 1.

Dans ce contexte, l'invention vise à résoudre les problèmes mentionnés ci-dessus en proposant un dispositif de maintien de pression pour la réalisation de pièces en matériaux composites par injection RTM.

A cette fin, l'invention propose un dispositif de maintien en pression chambre et ladite deuxième chambre étant agencées de manière étanche l'une par rapport à l'autre ;
- un corps souple apte à transmettre une mise sous pression de ladite première chambre vers ladite deuxième chambre de manière à exercer une pression sur ledit réseau d'injection du système d'injection ;
- une plaque rigide perforée apte à limiter la déformation dudit corps lors de ladite mise sous vide de ladite première chambre.

Grâce à l'invention, il n'est plus nécessaire de maintenir une pression de maintien dans le système d'injection de résine via l'injecteur. Ainsi, l'injecteur est libéré dès la fin de l'injection ce qui permet d'éviter la polymérisation de la résine à l'intérieur de l'injecteur pendant la phase de maintien de pression. Le temps d'occupation de l'injecteur est également réduit permettant d'augmenter ainsi la cadence de production par injecteur.

Grâce à l'invention, la déformation du corps souple lors de la mise sous vide du système d'injection est limitée, voire supprimée, par la présence d'une plaque rigide perforée laissant passer l'air. La plaque rigide perforée permet ainsi d'assurer le fonctionnement de la mise sous vide du système en s'affranchissant de tout risque d'obturation des canalisations par la déformation du corps souple.

Le dispositif de maintien en pression selon l'invention peut également présenter une ou plusieurs des caractéristiques ci-dessous, considérées individuellement ou selon toutes les combinaisons techniquement possibles :
- ladite première chambre est apte à recevoir de l'air sous pression.
- ledit corps souple est une membrane élastomère ;

L'invention a également pour objet un système d'injection de résine apte à la réalisation de pièces en matériaux composites comportant :
- un injecteur de résine ;
- un moule d'injection comportant une cavité apte à recevoir une préforme tissée ;
- un réseau d'injection de résine formé par une canalisation d'entrée de résine reliant l'injecteur de résine et ledit moule d'injection (et une canalisation de sortie de résine apte à évacuer le surplus de résine injecté dans ladite cavité :
- un dispositif de maintien en pression selon l'invention ;
- des moyens pour réaliser le vide dans ledit système d'injection ;
- des moyens pour réaliser le vide et/ou mettre sous pression la première chambre du dispositif de maintien en pression.

Le système d'injection de résine apte à la réalisation de pièces en matériaux composites selon l'invention peut également présenter une ou plusieurs des caractéristiques ci-dessous, considérées individuellement ou selon toutes les combinaisons techniquement possibles :
- ledit dispositif de maintien en pression est positionné au niveau de ladite canalisation d'entrée de résine ou au niveau de ladite canalisation de sortie de résine ;
- ledit dispositif de maintien en pression est agencé à l'intérieur dudit moule d'injection ;
- ledit dispositif de maintien en pression est agencé à l'intérieur dudit moule d'injection de manière à ce que ladite deuxième chambre dudit dispositif communique avec ladite cavité dudit moule d'injection ;
- ledit dispositif de maintien en pression est agencé à l'intérieur dudit moule d'injection de manière à ce que ladite deuxième chambre est en contact avec ladite préforme présente dans ladite cavité ;
- ledit dispositif de maintien en pression (et/ou ladite canalisation d'entrée de résine sont calorifugés.

L'invention a également pour objet un procédé d'injection de résine par RTM mis en oeuvre au moyen d'un système d'injection selon l'invention caractérisé en ce que ledit procédé comporte les étapes consistant à :
- mettre sous vide ladite première chambre dudit dispositif de maintien en pression ;
- mettre sous vide ledit réseau d'injection de résine formé au moins par ladite canalisation d'entrée de résine, ladite canalisation de sortie de résine, ladite cavité dudit moule d'injection, via lesdits moyens aptes à réaliser le vide dans le système d'injection ;
- injecter la résine à l'état liquide dans le réseau d'injection au moyen dudit injecteur de manière à atteindre une pression consigne à l'intérieur dudit moule d'injection :
- appliquer une pression de maintien dans le réseau d'injection au moyen dudit dispositif de maintien en pression jusqu'à la polymérisation de ladite résine.

Selon un mode avantageux, ladite première chambre est simultanément mise sous pression lors de l'étape d'injection de ladite résine, ladite mise sous pression étant réalisée de manière à ce que la pression à l'intérieur de ladite première chambre reste inférieure à ladite pression présente à l'intérieur dudit réseau d'injection.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue schématique illustrant un premier mode de réalisation d'un système d'injection RTM incorporant un dispositif de maintien de pression selon l'invention ;
- la figure 2 est une vue en perspective du dispositif de maintien en pression selon le premier mode de réalisation illustré à la figure 1 ;
- la figure 3 est une vue en coupe, selon le plan de coupe A-A, du dispositif de maintien en pression illustré à la figure 2 ;
- la figure 4 est une vue schématique illustrant un second mode de réalisation d'un système d'injection RTM incorporant un dispositif de maintien de pression selon l'invention :
- la figure 5 est une vue en coupe du moule d'injection illustré à la figure 4 lors de la phase d'injection de la résine ;
- la figure 6 est une vue en coupe du moule d'injection illustré à la figure 4 pendant le maintien en pression du système d'injection lors de la polymérisation de la pièce ;
- la figure 7 est une vue schématique illustrant un troisième mode de réalisation d'un moule d'injection incorporant un dispositif de maintien en pression selon l'invention, lors de la phase d'injection de la résine ;
- la figure 8 est une vue schématique illustrant un troisième mode de réalisation d'un moule d'injection incorporant un dispositif de maintien en pression selon l'invention, pendant le maintien en pression du système d'injection lors de la polymérisation de la pièce.

Dans toutes les figures, les éléments communs portent les mêmes numéros de référence sauf précision contraire.

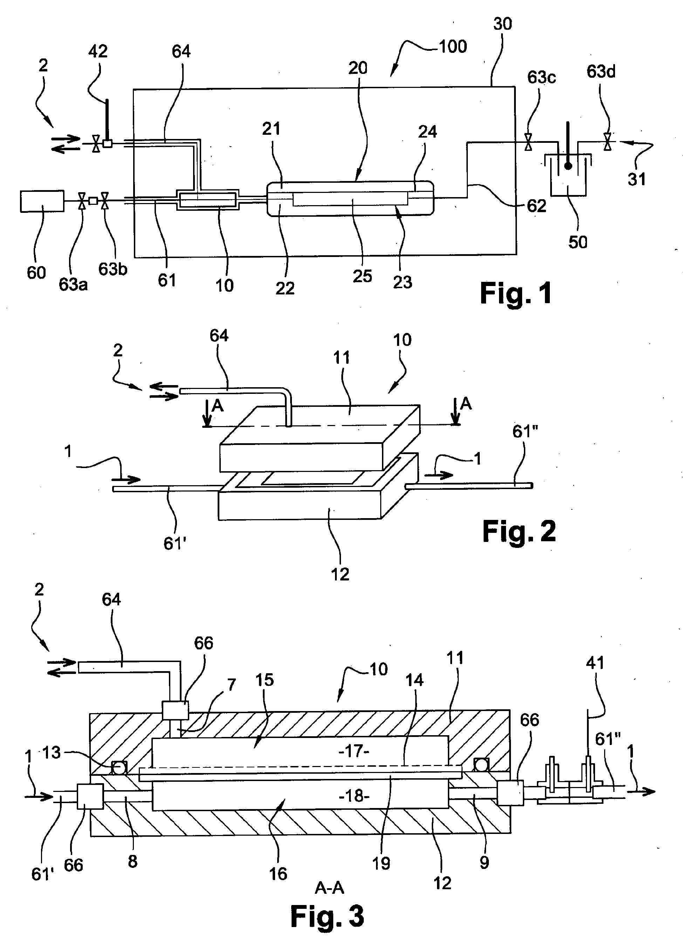

La figure 1 est une vue schématique illustrant un premier mode de réalisation d'un système d'injection RTM 100 incorporant un dispositif de maintien en pression 10 selon l'invention.

Le système 100 comporte les éléments classiques permettant de réaliser une pièce en matériaux composites par injection RTM. A cet effet, le système 100 comporte :
- un injecteur 60 de résine ;
- un moule d'injection 20 en deux parties constituées par une partie supérieure 21 et une partie inférieure 22, séparées par une surface de jointure 24 et comportant une cavité 23 à la forme de la pièce à réaliser dans laquelle est inséré une préforme tissée 25 ;
- un piège à résine 50 ;
- une canalisation d'injection 61 reliant l'injecteur 60 au moule d'injection 20 ;
- une canalisation de sortie de résine 62 reliant le moule d'injection 20 au piège à résine 50 ;
- des moyens 31 pour réaliser le vide dans le système d'injection 100 ;
- des vannes d'ouverture/fermeture 63a, 63b, 63c, 63d permettant de contrôler l'ouverture ou la fermeture des différentes canalisations 61, 62 du système 100 ;
- des moyens 30 pour chauffer le moule d'injection 20, telle que par exemple une étuve, de manière à accélérer la polymérisation.

Ainsi, de façon classique, la réalisation d'une pièce en matériaux composites par RTM se décompose en une pluralité d'étapes successives consistant à :
- préparer le moule d'injection 20 par l'application d'un démoulant ;
- préparer une préforme de fibres 25 réalisée préalablement par tissage ;
- mettre en place la préforme tissée 25 dans la cavité 23 du moule d'injection 20 ;
- fermer le moule d'injection 20 et préparer les canalisations d'injection 61 et de sortie de résine 62 ;
- mettre en température le moule d'injection 20 en étuve ou sous presse chauffante :
- mettre sous vide le réseau de canalisation 61, 62 ainsi que la cavité 23 du moule d'injection 20 par les moyens 31 aptes à réaliser le vide dans le système d'injection 100 ;
- injecter la résiné à l'état liquide dans la canalisation d'injection 61 au moyen de l'injecteur 60 de sorte que la résine migre dans la canalisation d'injection 61 vers la cavité 23 du moule d'injection 20 puis vers la canalisation de sortie de résine 62 lorsque la cavité 23 est remplie, le surplus de résine injectée étant récupéré dans le piège à résine 50 ; la préforme tissée est alors imprégnée de résine ;
- appliquer une pression de maintien sur la résine injectée à l'issu du remplissage de la cavité 23 jusqu'à la polymérisation de la résine de manière à continuer l'imprégnation de la préforme tissée 25 et à réduire la porosité de la pièce ;
- démouler la pièce réalisée.

Le système d'injection 100 comporte en outre un dispositif de maintien en pression 10 permettant d'appliquer la pression de maintien sur la résine nécessaire à la réalisation d'une pièce de qualité.

Selon le premier mode de réalisation illustré à la figure 1, le dispositif de maintien en pression 10 est indépendant du moule d'injection 20 est est positionné sur la canalisation d'injection 61 entre l'injecteur 60 et le moule d'injection 20.

Sur la figure 1, le dispositif de maintien en pression 10 est avantageusement placé dans l'étuve et à proximité du moule d'injection 20 ; toutefois, le dispositif 10 peut également être placé à l'extérieur de l'étuve.

Le dispositif de maintien en pression 10 est également raccordé, au moyen de la canalisation 64, à un réseau apte à injecter de l'air sous pression ou à tirer le vide sans la canalisation 64.

Le dispositif 10 est illustré de façon plus précise aux figures 2 et 3. La figure 2 illustre une vue en perspective du dispositif de maintien en pression 10 en position ouverte et la figure 3 est une vue en coupe, selon le plan de coupe A-A, du dispositif de maintien en pression en position fermée.

Le dispositif de maintien en pression 10 est formé par une partie supérieure 11 et une partie inférieure 12 maintenues assemblées par exemple par des moyens de vissage. Le partie supérieure 11 comporte une cavité 15 délimitant une première chambre 17, dite chambre à air, et de façon similaire, la partie inférieure 12 comporte une cavité 16 délimitant une seconde chambre 18, dite chambre à résine.

Les deux chambres 17 et 18 sont séparées par un corps souple 19 et des moyens 14 aptes à limiter la déformation du corps souple 19lors de la mise sous vide du réseau de canalisation, et notamment de la première chambre 17.

L'étanchéité entre des deux chambres 17 et 18 est assurée lors de la fermeture du dispositif 10 par pincement des extrémités du corps souple 19.

Les moyens 14 aptes à limiter la déformation du corps souple sont par exemple une tôle perforée 14, avantageusement une tôle en acier inoxydable comportant une pluralité d'orifices traversant de quelques millimètres de diamètre, typiquement de l'ordre de 2 à 3 mm. Les orifices de la tôle perforée 14 permettent ainsi de laisser passer l'air au travers de celle-ci, notamment pendant les phases de mise sous vide et de mise sous pression du système d'injection.

Le corps souple 19 est avantageusement une membrane élastique, par exemple une membrane étanche à l'air apte à transmettre une pression et à résister à de hautes températures (i.e. des températures supérieures à 180°C). Avantageusement, la membrane 19 est une membrane élastomère de type silicone de quelques millimètres d'épaisseur.

Un joint d'étanchéité supplémentaire 13 permet d'assurer l'étanchéité entre les chambres 17, 18 et l'extérieur du dispositif 10.

La chambre à résine 18, destinée à recevoir de la résine lors de l'injection, communique en amont avec un premier conduit 8 relié par un élément de raccordement 66 à une première portion 61' de la canalisation d'injection 61 et en aval avec une second conduit 9 relié également par un élément de raccordement 66 à une seconde portion 61" de la canalisation d'injection 61.

La chambre à air 17 communique dans sa partie supérieure avec un conduit d'amenée d'air 7 relié par un élément de raccordement 66 à la canalisation 64.

Les éléments de raccordement 66 sont avantageusement des moyens permettant de connecter et de déconnecter rapidement les canalisations 61', 61 ", 64.

Sur les figures 2 et 3, les flèches référencées 1 représentent le sens de migration de la résine à l'intérieur du dispositif 10 et les flèches référencées 2 représentent deux sens de circulation d'air dans la canalisation 64 (i.e. lors de la mise sous vide de la chambre à air 17 et lors de la mise sous pression de la chambre à air 17).

L'utilisation du dispositif de maintien en pression 10 modifie l'ensemble des étapes du procédé d'injection RTM connu tel que décrit précédemment.

Ainsi, lors de l'étape de mise sous vide du réseau de canalisation 61, 62 ainsi que la cavité 23 du moule d'injection 20 par les moyens 31, il est également nécessaire de mettre sous vide la chambre à air 17 via la canalisation 64 afin d'éviter toute déformation excessive de la membrane élastique 19 lors de cette opération. En effet, sans la mise sous vide de la chambre à air 17, permettant de plaquer la membrane 19 sur la tôle perforée 14, la membrane 19 risquerait d'être aspirée dans la chambre à résine 18 et venir obstruer un des conduits 8, 9 empêchant ainsi la mise sous vide du système 100 et notamment entre le dispositif de maintien en pression et l'injecteur 60.

Au démarrage de l'injection de résine dans la canalisation d'injection 61, lorsque le réseau de canalisations est encore sous vide, la chambre à air 17 est maintenue sous vide afin de maintenir la membrane élastique 19 plaquée contre la tôle perforée 14. La résine va donc commencer à migrer dans la canalisation 61 puis dans le dispositif 10 par aspiration.

Lorsque la pression dans le réseau d'injection (i.e. dans l'ensemble formé par la canalisation 61, la chambre à résine 18 du dispositif 10, la cavité 23 du moule d'injection 20 et par la canalisation de sortie de résine 62) passe au dessus d'une valeur seuil (typiquement au dessus de la pression atmosphérique) la chambre à air 17 peut commencer à être mis sous pression. A cet effet, de l'air sous pression est injecté dans la canalisation 64 de manière à mettre la chambre à air 17 sous pression.

Avantageusement, la pression du réseau d'injection est déterminée au moyen d'un capteur de pression 41 positionné à la sortie du dispositif 10 sur la portion 61" de la canalisation 61.

De manière à éviter une dégradation de la membrane élastique 19, il est nécessaire de mettre sous pression de façon progressive la chambre à air 17 lors de l'étape d'injection de la résine. De plus, la création d'un différentiel de pression entre la pression de la chambre à air 17 et la pression présente dans la chambre à résine 18 du réseau d'injection permet de garantir le maintien de la membrane élastique 19 contre la tôle perforée 14. Ainsi, par exemple, il convient de maintenir une pression relative dans la chambre à air 17 inférieure de 0,5 bars par rapport à la pression de la chambre à résine 18. Pour cela, un capteur de vide/pression 42 est positionné sur la canalisation 64.

A la fin de l'étape d'injection de la résine, c'est-à-dire lorsque le moule d'injection 20 est rempli de résine et que la pression de maintien dans le moule a atteint sa valeur consigne, l'injecteur 60 peut être isolé du réseau d'injection par la fermeture des vannes 63a et 63b puis par sa déconnection au niveau de l'élément de raccordement 66.

Le dispositif de maintien en pression 10 prend alors le relais par la mise en pression de la chambre à air 17. La pression de la chambre à air 17 est alors transmise à la chambre à résine 18 et au moule d'injection via la membrane élastique 19 qui vient se déformer et appuyer sur la résine présente dans la chambre à résine 18. Ainsi, le dispositif de maintien en pression permet de garantir une pression de maintien dans le moule d'injection jusqu'à la polymérisation complète de la pièce.

L'injecteur étant isolé dès la fin de l'étape d'injection, il peut être nettoyé facilement puisque la résine n'a pas encore polymérisé et peut également être utilisé pour injecter de la résine dans un second système d'injection, parallèle au premier, alors que la polymérisation de la pièce du premier système n'est pas encore terminée.

De manière à retarder le figeage de la résine et permettre la transmission de la pression dans le moule d'injection le plus longtemps possible, le dispositif de maintien en pression 10 et la portion 61" de la canalisation 61 comprise entre le dispositif 10 et le moule d'injection 20 sont entièrement calorifugés.

Ainsi dans le cas d'un chauffage en étuve, cela permettra à la résine d'éviter de polymériser dans le dispositif 10 et dans la canalisation 61" lors de l'augmentation de la température.

Dans le cas d'une injection sous presse, cela permettra d'éviter la solidification ou l'épaississement de la résine par refroidissement au contact de l'air dans le dispositif 10 et dans la canalisation 61".

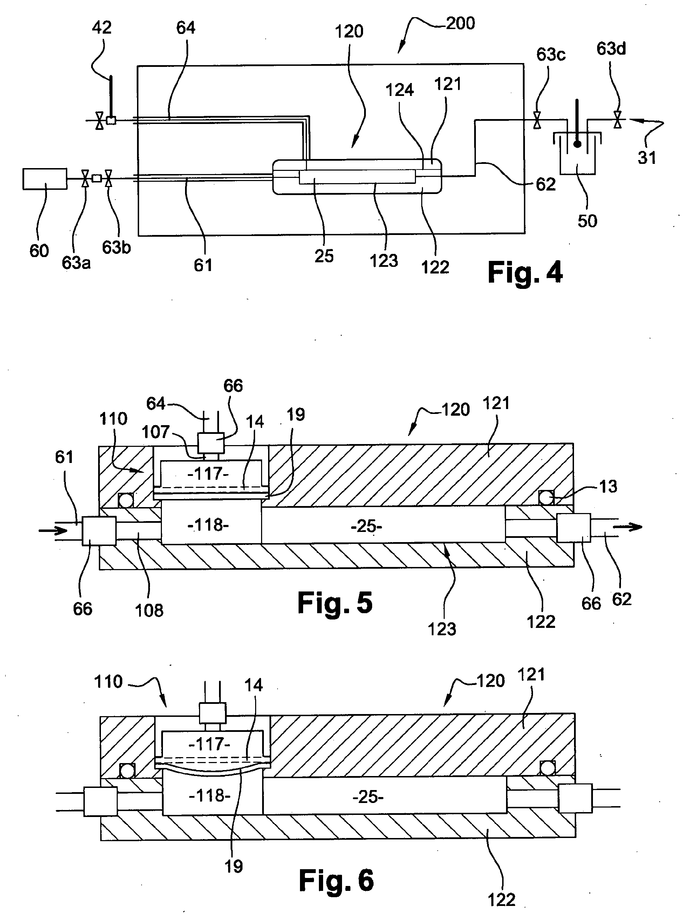

Les figures 4, 5, et 6 illustrent un second mode de réalisation de l'invention. Dans ce second mode de réalisation, le dispositif de maintien en pression est inséré dans le moule d'injection 120.

La figure 4 illustre plus particulièrement le système d'injection 200 dans son ensemble et les figures 5 et 6 illustrent une vue en coupe du moule d'injection 120 incorporant le dispositif de maintien en pression 110 lors de la phase d'injection de la résine (figure 5) et pendant le maintien en pression du système d'injection lors de la polymérisation de la pièce (figure 6).

Le système d'injection 200 est similaire au système d'injection 100 décrit précédemment et les éléments communs portent les mêmes références.

En revanche, le système d'injection 200 se différencie du système d'injection 100 par le moule d'injection 120.

Le moule d'injection 120 est un moule en deux parties, une partie supérieure 121 et une partie inférieure 122, séparées par une surface de jointure 124 et comportant une cavité 123 à la forme de la pièce à réaliser dans laquelle est inséré une préforme tissée 125.

La partie inférieure 122, dans laquelle est agencée la cavité 123, communique en amont avec la canalisation d'injection 61 reliée à la partie inférieure 122 par un élément de raccordement 66 et en aval avec la canalisation de sortie de résine 62 reliée à la partie inférieure 122 par un second élément de raccordement 66.

De façon similaire à la description faîte précédemment le dispositif de maintien en pression 110 est constitué d'une chambre à air 117 et d'une chambre à résine 118. La chambre à air 117 est formée par une cavité agencée à l'intérieur de la partie supérieure 121 du moule d'injection 120. La chambre à air 117 communique dans sa partie supérieure avec un conduit d'amenée d'air 107 relié par un élément de raccordement 66 à la canalisation 64.

La chambre à résine 118 est agencée principalement dans la partie inférieure 122 du moule d'injection 120 de manière à communiquer avec la cavité 23.

La chambre à résine 118 du dispositif de maintien 110 est avantageusement placée en amont de la cavité 123; toutefois, il est également possible de positionner le dispositif de maintien 110 de manière à ce que la chambre à résine 118 soit positionnée en aval de la cavité 123.

La chambre à résine 118 communique en amont avec un premier conduit 108 relié à la canalisation d'injection 61 et en aval avec la cavité 123.

De manière similaire à la description du premier mode de réalisation, la chambre à air 117 est mise sous vide, lors de la mise sous vide du système d'injection 200, de manière à maintenir plaqué la membrane 19 sur la tôle perforée 14.

A la fin de l'étape d'injection de la résine illustrée par la figure 6, le dispositif de maintien en pression 110 prend alors le relais par la mise en pression de la chambre à air 117. La pression de la chambre à air 117 est alors transmise à la chambre à résine 118 et à la cavité 23 via la membrane élastique 19 qui vient se déformer et appuyer sur la résine présente dans la chambre à résine 118. Ainsi, le dispositif de maintien en pression permet de garantir la pression de maintien dans le moule d'injection 120 jusqu'à la polymérisation complète de la pièce.

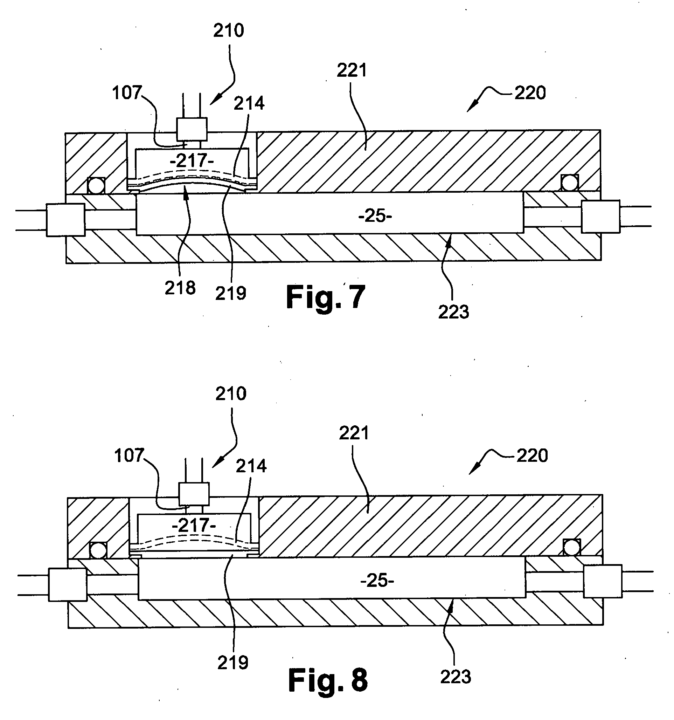

Les figures 7 et 8 illustrent un troisième mode de réalisation de l'invention. Dans ce troisième mode de réalisation, le dispositif de maintien en pression 210 est incorporé dans le moule d'injection 220 au contact de la préforme 25.

Dans ce troisième mode de réalisation, le dispositif de maintien en pression 210 est agencé de manière à ce que la chambre à résine 218 se situe au dessus de la cavité 223 et au contact de la préforme 25.

De manière similaire au mode de réalisation précédant illustré aux figures 4, 5, 6, la chambre à air 217 est formée par une cavité agencée à l'intérieur de la partie supérieure 221 du moule d'injection 220. La chambre à air 117 communique dans sa partie supérieure avec un conduit d'amenée d'air 107 relié par un élément de raccordement 66 à la canalisation 64

Ce troisième mode de réalisation est utilisé dans le cas où les critères géométriques de la pièce sont suffisamment tolérants pour admettre un défaut de forme localisé. Avantageusement, le dispositif de maintien en pression est localisé à l'une des extrémités de la préforme qui sera par la suite mise au rebut.

Ainsi, selon le mode avantageux illustré aux les figures 7 et 8, la tôle perforée 214 comporte une forme adaptée, avantageusement en arc de cercle dont la convexité est orientée vers la chambre à air 217, de manière à créer une chambre à résine 218 entre la préforme 25 et la membrane élastique 219. Ce volume de résine entre la membrane 219 est la préforme 25 se diffusera dans la préforme lors de l'étape de mise en pression (figure 8), ce qui permettra de d'affranchir d'un risque de sur-compactage de la résine lors de cette étape.

Selon une variante de ce mode de réalisation, la membrane élastique 219 peut être directement au contact de la préforme 25. Dans cette situation la chambre à résine est constituée par la cavité 23 du moule d'injection 220 remplie de résine lors de l'injection.

D'une façon générale, le volume de résine à prendre en compte pour définir le volume de la chambre à résine est dépendant du volume total de résine injectée dans la pièce. Ainsi, à titre d'exemple, le volume de la chambre à résine est supérieur ou égale à 5% du volume totale de la résine injectée. Ce volume résine correspondant principalement au volume d'injection résiduelle que la préforme est encore capable d'absorber en fin d'injection alors que la pression de maintien a déjà atteinte sa valeur nominale et que le débit d'injection est proche de zéro. Cette injection, dite injection résiduelle, correspond physiquement au remplissage des derniers espace inter et intra-torons de la préforme tissée.

L'invention a été particulièrement décrite avec une membrane élastique souple pour la transmission de la pression dans le dispositif d'injection ; toutefois la transmission de pression dans le dispositif de maintien en pression peut également être une membrane rigide, un piston ou encore tout moyen ad hoc permettant de transmettre une pression.

L'invention a été particulièrement décrite en positionnement le dispositif de maintien en pression au niveau des canalisations d'injection ou d'entrée de la résine du moule d'injection ; toutefois l'invention est également applicable en positionnement le dispositif de maintien en pression au niveau des canalisations de sortie de résine.

## Revendications

1. Dispositif de maintien en pression (10, 110, 210) d'un système d'injection de résine (100, 200) comportant
- une première chambre (17, 117, 217) apte à être reliée à des moyens de mise sous pression et apte à être reliée à des moyens de mise sous vide :
- une deuxième chambre (18, 118, 218) apte à être reliée à un réseau d'injection de résine du système d'injection (100, 200) au moyen d'une canalisation d'injection de résine (61) et d'une canalisation de sortie de résine (62), ladite première chambre (17, 117, 217) et ladite deuxième chambre (18, 118, 218) étant agencées de manière étanche l'une par rapport à l'autre ;
- un corps souple (19, 219) apte à transmettre une mise sous pression de ladite première chambre (17, 117, 217) vers ladite deuxième chambre (18, 118, 218) de manière à exercer une pression sur ledit réseau d'injection du système d'injection ; **caractérisé en ce qu'**il comporte:
- une plaque rigide perforée (14, 214) apte à limiter la déformation dudit corps souple (19, 219) lors de ladite mise sous vide de ladite première chambre (17, 117,217).

2. Dispositif de maintien en pression (10, 110, 210) d'un système d'injection de résine (100, 200) selon la revendication 1 **caractérisé en ce que** ladite première chambre (17, 117, 217) est apte à recevoir de l'air sous pression.

3. Dispositif de maintien en pression (10, 110, 210) d'un système d'injection de résine (100, 200) selon l'une des revendications 1 à 2 **caractérisé en ce que** ledit corps souple (19, 219) est une membrane élastomère.

4. Système d'injection de résine (100, 200) apte à la réalisation de pièces en matériaux composites comportant :
- un injecteur (60) de résine ;
- un moule d'injection (20, 120, 220) comportant une cavité (23) apte à recevoir une préforme tissée (25) ;
- un réseau d'injection de résine formé par une canalisation d'entrée de résine (61) reliant l'injecteur (60) de résine et ledit moule d'injection (20, 120, 220) et une canalisation de sortie de résine (62) apte à évacuer le surplus de résine injecté dans ladite cavité (23) :
- un dispositif de maintien en pression (10, 110, 220) selon l'une des revendications 1 à 3 ;
- des moyens (31) pour réaliser le vide dans ledit système d'injection (100, 200) ;
- des moyens (64) pour réaliser le vide et/ou mettre sous pression la première chambre (17, 117, 217) du dispositif de maintien en pression (10, 110, 210).

5. Système d'injection de résine (100, 200) selon la revendication 5 **caractérisé en ce que** ledit dispositif de maintien en pression (10) est positionné au niveau de ladite canalisation d'entrée de résine (61) ou au niveau de ladite canalisation de sortie de résine (62).

6. Système d'injection de résine (100, 200) selon la revendication 4 **caractérisé en ce que** ledit dispositif de maintien en pression (110, 210) est agencé à l'intérieur dudit moule d'injection (120, 220).

7. Système d'injection de résine (100, 200) selon la revendication 6 **caractérisé en ce que** ledit dispositif de maintien en pression (110, 220) est agencé à l'intérieur dudit moule d'injection (120, 220) de manière à ce que ladite deuxième chambre (18, 118, 218) dudit dispositif (110, 210) communique avec ladite cavité (23) dudit moule d'injection (120, 220).

8. Système d'injection de résine (100, 200) selon l'une des revendications 6 à 7 **caractérisé en ce que** ledit dispositif de maintien en pression (210) est agencé à l'intérieur dudit moule d'injection (220) de manière à ce que ladite deuxième chambre (218) est en contact avec ladite préforme (25) présente dans ladite cavité (23).

9. Système d'injection de résine (100, 200) selon l'une des revendications 4 à 8 **caractérisé en ce que** ledit dispositif de maintien en pression (10, 110, 210) et/ou ladite canalisation d'entrée de résine (61) sont calorifugés.

10. Procédé d'injection de résine par RTM mis en oeuvre au moyen d'un système d'injection selon l'une des revendications 4 à 9 **caractérisé en ce que** ledit procédé comporte les étapes consistant à :
- mettre sous vide ladite première chambre (17, 117, 217) dudit dispositif de maintien en pression (10, 110, 210) ;
- mettre sous vide ledit réseau d'injection de résine formé au moins par ladite canalisation d'entrée de résine (61), ladite canalisation de sortie de résine (62), ladite cavité (23) dudit moule d'injection (20), via lesdits moyens (31) aptes à réaliser le vide dans le système d'injection (100, 200) ;
- injecter la résine à l'état liquide dans le réseau d'injection au moyen dudit injecteur (60) de manière à atteindre une pression consigne à l'intérieur dudit moule d'injection (20) :
- appliquer une pression de maintien dans le réseau d'injection au moyen dudit dispositif de maintien en pression (10, 110, 210) jusqu'à la polymérisation de ladite résine.

11. Procédé d'injection de résine par RTM selon la revendication 10 **caractérisé en ce que** ladite première chambre (17, 117, 217) est simultanément mise sous pression lors de l'étape d'injection de ladite résine, ladite mise sous pression étant réalisée de manière à ce que la pression à l'intérieur de ladite première chambre (17, 117, 217) reste inférieure à ladite pression présente à l'intérieur dudit réseau d'injection.

## Patentansprüche

1. Haltevorrichtung unter Druck (10, 110, 210) eines Harzeinspritzsystems (100, 200), umfassend:
- eine erste Kammer (17, 117, 217), die geeignet ist, mit Mitteln zum Unter-Druck-Setzen verbunden zu sein und die geeignet ist, mit Mitteln zum Unter-Vakuum-Setzen verbunden zu sein;
- eine zweite Kammer (18, 118, 218), die geeignet ist, mit einem Harzeinspritznetz des Einspritzsystems (100, 200) mittels einer Harzeinspritzkanalisation (61) und einer Harzausgangskanalisation (62) verbunden zu sein, wobei die genannte erste Kammer (17, 117, 217) und die genannte zweite Kammer (18, 118, 218) im Verhältnis zueinander abgedichtet angeordnet sind;
- einen elastischen Körper (19, 219), der geeignet ist, ein Unter-Druck-Setzen von der ersten Kammer (17, 117, 217) zur genannten zweiten Kammer (18, 118, 218) derart zu übertragen, dass ein Druck auf das genannte Einspritznetz des Einspritzsystems ausgeübt wird, dadurch gekennzeichet, dass es umfasst:
- eine perforierte steife Platte (14, 214), die geeignet ist, die Verformung des genannten elastischen Körpers (19, 219) bei dem genannten Unter-Druck-Setzen der genannten ersten Kammer (17, 117, 217) zu begrenzen.

2. Haltevorrichtung unter Druck (10, 110, 210) eines Harzeinspritzsystems (100, 200) gemäß Anspruch 1, **dadurch gekennzeichnet, dass** die genannte erste Kammer (17, 117, 217) geeignet ist, unter Druck stehende Luft zu empfangen.

3. Haltevorrichtung unter Druck (10, 110, 210) eines Harzeinspritzsystems (100, 200) gemäß Anspruch 1 bis 2, dadurch gekenntzeichnet, dass der genannte elastische Körper (19, 219) eine Elastomermembran ist.

4. Harzeinspritzsystem (100, 200), das zur Realisierung von Teilen aus Verbundmaterial geeignet ist, umfassend:
- eignen Harzeinspritzer (60);
- eine Einspritzform (20, 120, 220), die eine Aushöhlung (23) umfasst, welche geeignet ist, eine gewebte Vorform (25) aufzunehmen;
- ein durch eine Harzeingangskanalisation (61) gebildetes Einspritznetz, das den Harzeinspritzer (60) und die genannte Einspritzform (20, 120, 220) und eine Harzausgangskanalisation (62) verbindet, die geeignet ist, den in die Aushöhlung (23) eingespritzten Harzüberschuss auszutragen;
- eine Haltevorrichtung unter Druck (10, 110, 220) gemäß Anspruch 1 bis 3;
- Mittel (31) zur Realisierung des Vakuums in dem genannten Einspritzsystem (100, 200);
- Mittel (64) zur Realisierung des Vakuums und / oder des Unter-Druck-Setzens der ersten Kammer (17, 117, 217) der Haltevorrichtung unter Druck (10, 110, 210).

5. Harzeinspritzsystem (100, 200) gemäß Anspruch 5, **dadurch gekennzeichnet, dass** die genannte Haltevorrichtung unter Druck (10) an der genannten Harzeingangskanalisation (61) oder an der genannten Harzausgangskanalisation (62) positioniert ist.

6. Harzeinspritzsystem (100, 200) gemäß Anspruch 4, **dadurch gekennzeichnet, dass** die genannte Haltevorrichtung unter Druck (110, 210) im Innern der genannten Einspritzform (120, 220) angeordnet ist.

7. Harzeinspritzsystem (100, 200) gemäß Anspruch 6, **dadurch gekennzeichnet, dass** die genannte Haltevorrichtung unter Druck (110, 220) im Innern der genannten Einspritzform (120, 220) derart angeordnet ist, dass die genannte zweite Kammer (18, 118, 218) der genannten Vorrichtung (110, 210) mit der genannten Aushöhlung (23) der genannten Einspritzform (120, 220) in Verbindung steht.

8. Harzeinspritzsystem (100, 200) gemäß Anspruch 6 bis 7, **dadurch gekennzeichnet, dass** die genannte Haltevorrichtung unter Druck (210) im Innern der genannten Einspritzform (220) derart angeordnet ist, dass die genannte zweite Kammer (218) mit der genannten, in der genannten Aushöhlung (23) vorhandenen Vorform (25) in Kontakt ist.

9. Harzeinspritzsystem (100, 200) gemäß Anspruch 4 bis 8, **dadurch gekennzeichnet, dass** die genannte Haltevorrichtung unter Druck (10, 110, 210) und / oder die genannte Harzeingangskanalisation (61) wärmgedämmt sind.

10. Harzeinspritzverfahren per RTM, das mittels eines Einspritzverfahrens gemäß Anspruch 4 bis 9 umgesetzt wird, **dadurch gekennzeichnet, dass** das genannte Verfahren die Stufen umfasst, bestehend aus:
- Unter-Vakuum-Setzen der genannten ersten Kammer (17, 117, 217) der genannten Haltevorrichtung unter Druck (10, 110, 210);
- Unter-Vakuum-Setzen des genannten Harzeinspritznetzes, das wenigstens durch die genannte Harzeingangskanalisation (61), die genannte Harzausgangskanalisation (62), die genannte Aushöhlung (23) der genannten Einspritzform (20) über die genannten Mittel (31) gebildet wird, die geeignet sind, das Vakuum in dem Einspritzsystem (100, 200) zu realisieren;
- Einspritzen des Harzes im flüssigen Zustand in das Einspritznetz mittels des genannten Einspritzers (60) derart, dass ein Solldruck im Innern der genannten Einspritzform (20) gebildet wird;
- Anwendung eines Haltedrucks in dem Einspritznetz mittels der genannten Haltevorrichtung unter Druck (10, 110, 210) bis zur Polymerisierung des genannten Harzes.

11. Harzeinspritzverfahren per RTM gemäß Anspruch 10, **dadurch gekennzeichnet, dass** die genannte erste Kammer (17, 117, 217) bei der Einspritzstufe des genannten Harzes gleichzeitig unter Druck gesetzt wird, wobei das genannte Unter-Druck-Setzen derart realisiert wird, dass der Druck im Innern der genannten ersten Kammer (17, 117, 217) unter dem genannten Druck bleibt, der im Innern des genannten Einspritznetzes vorhanden ist.

## Claims

1. Pressure-maintaining device (10, 110, 210) for a resin injecting system (100, 200) comprising
- a first chamber (17, 117, 217) that can be connected to pressurising means and that can be connected to vacuum means:
- a second chamber (18, 118, 218) that can be connected to a resin injection network of the injection system (100, 200) by means of a resin injection pipe (61) and a resin outlet pipe (62), said first chamber (17, 117, 217) and said second chamber (18, 118, 218) being arranged so that the one is unable to leak into the other;
- a flexible body (19, 219) able to transmit pressurizing from said first chamber (17, 117, 217) to said second chamber (18, 118, 218) so as to apply pressure on said injection network of the injection system; **characterised in that** it comprises:
- a perforated rigid plate (14, 214) able to limit the deformation of said flexible body (19, 219) during said placing in a vacuum of said first chamber (17, 117, 217).

2. Pressure-maintaining device (10, 110, 210) for a resin injecting system (100, 200) according to claim 1 **characterised in that** said first chamber (17, 117, 217) is able to receive air under pressure.

3. Pressure-maintaining device (10, 110, 210) for a resin injecting system (100, 200) according to one of claims 1 to 2 **characterised in that** said flexible body (19, 219) is an elastomeric membrane.

4. Resin injection system (100, 200) able to carry out parts made of composite material comprising:
- a resin injector (60);
- an injection mould (20, 120, 220) comprising a cavity (23) able to receive a woven preform (25);
- a resin injection network formed by a resin inlet pipe (61) connecting the resin injector (60) and said injection mould (20, 120, 220) and a resin outlet pipe (62) able to remove the excess resin injected into said cavity (23) :
- a pressure-maintaining device (10, 110, 220) according to one of claims 1 to 3;
- means (31) for creating a vacuum in said injection system (100, 200);
- means (64) for creating a vacuum and/or for pressurising the first chamber (17, 117, 217) of the pressure-maintaining device (10, 110, 210).

5. Resin injection system (100, 200) according to claim 5 **characterised in that** said pressure-maintaining device (10) is positioned on said resin inlet pipe (61) or on said resin outlet pipe (62).

6. Resin injection system (100, 200) according to claim 4 **characterized in that** said pressure-maintaining device (110, 210) is arranged inside said injection mould (120, 220).

7. Resin injection system (100, 200) according to claim 6 **characterised in that** said pressure-maintaining device (110, 220) is arranged inside said injection mould (120, 220) in such a way that said second chamber (18, 118, 218) of said device (110, 210) communicates with said cavity (23) of said injection mould (120, 220).

8. Resin injection system (100, 200) according to one of claims 6 to 7 **characterised in that** said pressure-maintaining device (210) is arranged inside said injection mould (220) in such a way that said second chamber (218) is in contact with said preform (25) present in said cavity (23).

9. Resin injection system (100, 200) according to one of claims 4 to 8 **characterised in that** said pressure-maintaining device (10, 110, 210) and/or said resin inlet pipe (61) are thermally insulated.

10. Method for injecting resin via RTM implemented by means of an injection system according to one of claims 4 to 9 **characterised in that** said method comprises the steps consisting in:
- placing in a vacuum said first chamber (17, 117, 217) of said pressure-maintaining device (10, 110, 210);
- placing in a vacuum said resin injection network formed at least by said resin inlet pipe (61), said resin outlet pipe (62), said cavity (23) of said injection mould (20), via said means (31) able to create a vacuum in the injection system (100, 200);
- injecting the resin in liquid state into the injection network by means of said injector (60) in such a way as to reach a set pressure inside said injection mould (20):
- applying a maintaining pressure in the injection network by means of said pressure-maintaining device (10, 110, 210) until the polymerisation of said resin.

11. Method for injecting resin via RTM according to claim 10 **characterised in that** said first chamber (17, 117, 217) is simultaneously pressurised during the step of injecting said resin, said pressuring being carried out in such a way that the pressure inside said first chamber (17, 117, 217) remains less than said pressure present inside said injection network.
